# FASCICULE DE BREVET EUROPEEN

(11) **EP 1 292 431 B1**
(45) Date de publication et mention de la délivrance du brevet: **30.04.2014**
(21) Numéro de dépôt: 01947541.7
(22) Date de dépôt: 20.06.2001
(51) Int. Cl.: B25J 9/10, B25J 13/02, G05G 9/047

(54) **BRAS DE COMMANDE A DEUX BRANCHES EN PARALLELE**
STEUERARM MIT PARALLELER STRUKTUR
CONTROL ARM WITH TWO PARALLEL BRANCHES

(30) Priorité: 21.06.2000 FR 0007930
(43) Date de publication de la demande: 19.03.2003
(73) Titulaire: Commissariat à l'Énergie Atomique et aux Énergies Alternatives, 75015 Paris (FR)
(72) Inventeur: RIWAN, Alain, F-94240 L'Hay Les Roses (FR); GOSSELIN, Florian, F-92260 Fontenay Aux Roses (FR)
(74) Mandataire: Ilgart, Jean-Christophe
(86) Numéro de dépôt international: PCT/FR2001/001927
(87) Numéro de publication internationale: WO 2001/098038

(56) Documents cités:
- US-A- 4 712 971
- US-A- 6 047 610
- DATABASE WPI Section PQ, Week 198105 Derwent Publications Ltd., London, GB; Class P62, AN 1981-A8960D XP002176252 -& SU 737 205 A (AS UKR KIEV PATON), 30 mai 1980 (1980-05-30)
- PATENT ABSTRACTS OF JAPAN vol. 1998, no. 02, 30 janvier 1998 (1998-01-30) & JP 09 272082 A (NIPPON STEEL CORP), 21 octobre 1997 (1997-10-21)
- IWATA H: "PEN-BASED HAPTIC VIRTUAL ENVIRONMENT" PROCEEDINGS OF THE VIRTUAL REALITY ANNUAL INTERNATIONAL SYMPOSIUM,US,NEW YORK, IEEE, vol. SYMP. 1, 18 septembre 1993 (1993-09-18), pages 287-292, XP000457699 cité dans la demande

## Description

Le sujet de cette intervention est un bras de commande comprenant deux branches en parallèle.

Les bras de commande ont pour fonction de répercuter des mouvements qui leur sont infligés par un opérateur en instructions de commande d'un appareillage ou d'un système, généralement un robot distant appelé bras esclave ou une simulation informatique. Lorsque le bras de commande dispose de suffisamment de degrés de liberté, l'opérateur peut le commander en translation et en rotation dans l'espace.

Les bras utilisés en robotique prennent des formes très différentes. Dans la plus traditionnelle, ils sont composés d'un enchaînement de segments reliés entre eux par des articulations ou parfois d'autres genres de jointures : cette disposition est appelée « en série ». Mais des inconvénients sont associés à de tels bras dès que le nombre de segments devient important. Ainsi, les mécanismes situés aux jointures présentent des jeux dont le cumul finit par produire une imprécision notable sur la position de l'extrémité libre du bras. De plus, les moteurs qu'il faut normalement ajouter sur le bras pour commander les états des jointures afin de modifier leur configuration ou au contraire de les maintenir fixes quels que soient les efforts extérieurs qu'elles subissent, et qui sont souvent la partie la plus pesante des bras, sont responsables de moments fléchissants excessifs qui peuvent conduire à renforcer la structure des segments et donc alourdir encore le bras, le rendant incommode à manipuler. Il a été proposé de rejeter les moteurs sur l'embase fixe sur laquelle le bras est monté, mais cette solution implique d'installer des transmissions entre les moteurs et les jointures qu'ils commandent, ce qui n'est pas toujours possible et contribue à rendre le bras complexe.

C'est pourquoi on s'est intéressé, plus récemment dans l'histoire de la robotique, à des constructions utilisant plusieurs branches en parallèle, au nombre de deux ou plus, et dont les extrémités distales sont reliées. Pour un nombre de degrés de liberté semblable, les branches des bras ainsi constitués sont moins complexes que dans les robots en série, ce qui atténue beaucoup les inconvénients de l'imprécision de la position du bras et du poids des branches. Cependant, ce type de robot souffre de limitations spécifiques. Ils peuvent ainsi être difficiles à commander de façon simple à un état souhaité, en raison de leur complexité cinématique plus grande ; leur domaine de travail est, en général, plus petit qu'avec des bras en série car il est limité par celui des différentes branches en parallèle et par les collisions entre les segments des différentes branches ; enfin, un défaut, corrélé au précédent, est que les singularités, qui sont des configurations que l'on doit éviter car le robot peut y subir des mouvements incontrôlés, sont en général plus nombreuses.

Les singularités correspondent à des disparitions locales des degrés de liberté ou à des mouvements incontrôlés. Ces dernières singularités sont spécifiques aux robots parallèles, mais toutes restreignent le domaine d'utilisation du bras. Cet inconvénient est plus prononcé avec les bras maîtres, qui ne sont pas prévus pour exercer des mouvements répétitifs ou connus à l'avance et que l'on commande à la main, sans se soucier des singularités, qu'on est donc susceptible d'atteindre à l'improviste. C'est pourquoi il faut les limiter tout en les reportant aux extrémités du domaine de travail.

Le document de l'art antérieur le plus proche est peut-être un article d'Iwata intitulé « Pen-based haptic virtual environment » (IEEE-ICRA 1993, p.287 à 292) qui décrit un robot parallèle à deux branches unies par un poignet mais dont les branches sont disposées côte à côte. Ce bras comprend des singularités à cause d'un degré de liberté de vissage dans le poignet et des risques de collision entre les branches, qui sont montée sur l'embase par des segments qui s'étendent dans le même sens.

On doit aussi mentionner les documents SU-A-737 205 et US-A-6 047 610, qui comprennent une ou deux branches dont chacune est composée d'un mécanisme à quatre segments articulés en losange déformable, dont deux segments sont articulés à des endroits adjacents d'une embase commune, mais par des articulations rotatives qui font changer les orientations de ces segments.

Appliquer cette conception à des branches pourvues de plus de deux segments ferait facilement apparaître des singularités par collisions des branches entre elles.

Une autre différence entre l'invention et les deux brevets cités précédemment est que celle-là concerne une structure en branches parallèles complètes, où le poignet est uni aux branches par leurs extrémités distales, alors que ceux-ci sont relatif à des structures hybrides en série et parallèle comprenant des portions aux branches séparées jointes à des portions à branche unique : dans SU-A-737 205 par exemple, la portion à branche unique comprend les articulations 8, 9 et 10 entre la portion aux branches séparées et le poignet. De telles structures hybrides sont moins avantageuses en ce qu'elles procurent une amplitude de mouvement moins grande au poignet. Elles ne sont pas non plus applicables facilement à un bras maître doté d'un grand nombre de degrés de liberté en translation et en rotation.

On conclut de ces diverses remarques que les bras en parallèle sont intéressants comme bras maîtres à cause de la commodité qu'il y a à les manier, mais que leurs défauts spécifiques rendent en réalité beaucoup d'entre eux mal appropriés à cette application. L'invention a trait à un agencement particulier de bras en parallèle, dont les avantages principaux sont une réduction importante des collisions entre les différents corps du robot et des singularités. Il en résulte une grande facilité de commande, qui permet d'imposer sans peine le mouvement voulu pour produire un état souhaité.

Ces objectifs sont atteints avec un bras à branches en parallèle possédant une configuration spéciale : l'invention est relative sous sa forme la plus générale à un bras de robot composé de segments articulés répartis en deux branches réunies à leurs extrémités distales par un poignet, mobile en translations et en rotations et dont les branches sont constituées de façon à s'étendre, à partir d'une embase commune, dans deux moitiés opposées de l'espace par rapport à un plan de séparation quand le poignet est coupé par ledit plan, et lesdites branches comprennent des segments respectifs connectés à l'embase qui s'étendent dans des sens opposés à partir de l'embase. Ces segments sont connectés à l'embase par des articulations pivotantes qui ne modifient pas leur direction d'extension quand on agit sur elles. Avantageusement, les branches ont un même nombre de segments ; elles peuvent encore être semblables, et symétriques si les segments connectés à l'embase sont en prolongement. Dans tous ces cas, les branches sont largement écartées l'une de l'autre pour presque tous les mouvements qu'on inflige au poignet, ce qui élimine presque complètement les collisions entre les branches.

Dans une forme préférée de l'invention, les branches comprennent trois premiers segments, reliés entre eux et à l'embase par des articulations à moteur de retour d'effort, et un segment de raccord au poignet.

Dans certaines variantes de réalisation, on peut munir le bras d'un porte-poignet à orientation constante.

L'invention sera décrite plus en détail à l'aide des figures suivantes :
- la figure 1 est une représentation schématique de l'invention,
- la figure 2 est une vue d'une réalisation perfectionnée,

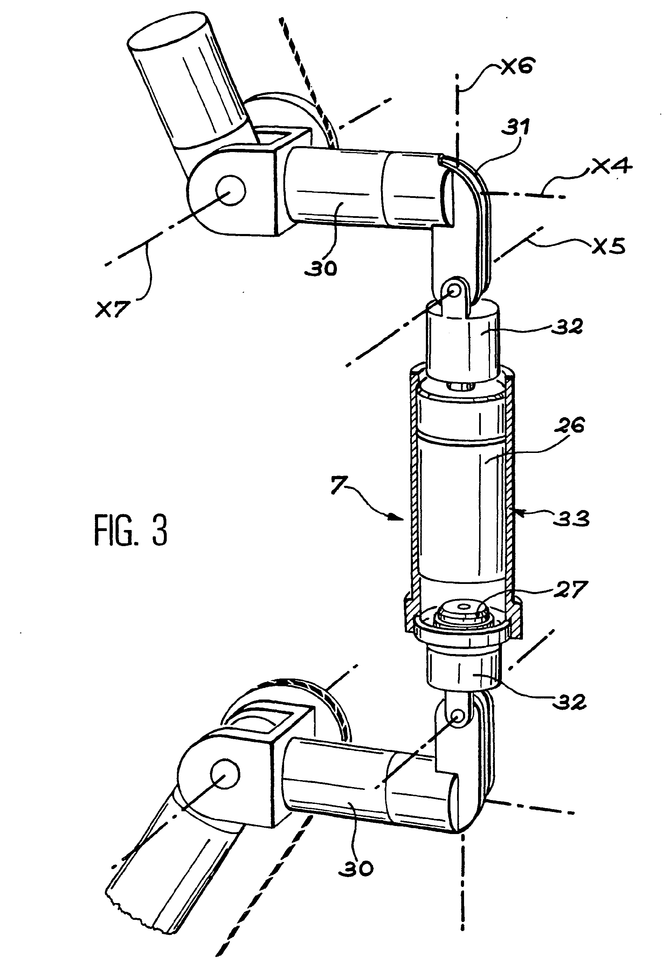

- et la figure 3 est une vue d'un poignet perfectionné.

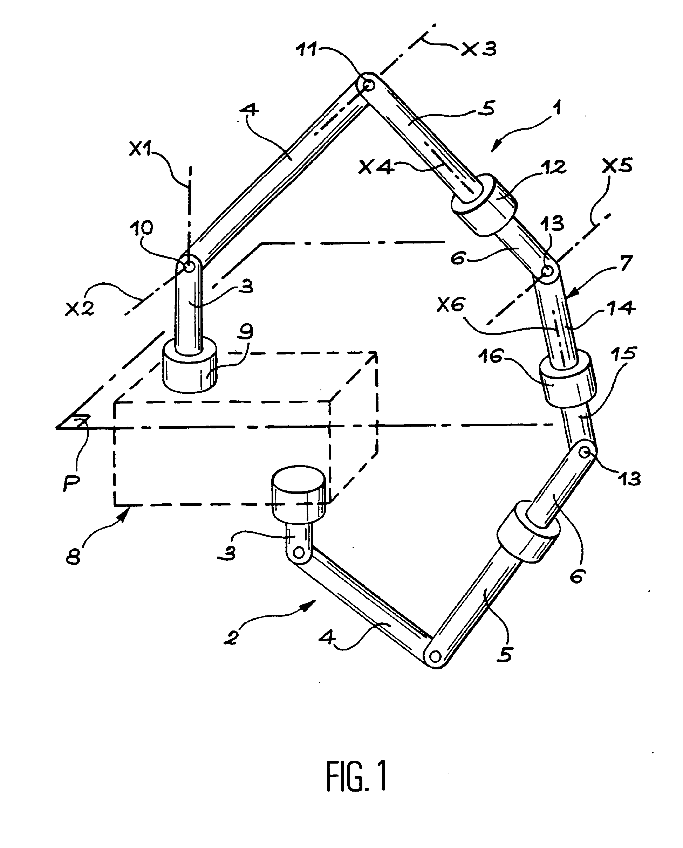

Se référant à la figure 1, on voit que le bras est composé d'une branche supérieure 1 et d'une branche inférieure 2 dont chacune est composée d'un premier segment 3 vertical (lesdits segments 3 s'étendant dans des sens opposés à partir d'une embase commune 8), d'un deuxième segment 4, d'un troisième segment 5, d'un quatrième segment 6, et qu'un poignet 7 unit les extrémités des deux quatrièmes segments 6. Des articulations relient successivement les segments entre eux et au poignet, ainsi qu'à l'embase commune 8 de la façon que voici : une articulation pivotante d'axe X1 aligné avec le premier segment 3 et portant la référence 9 relie le premier segment 3 à l'embase commune 8 ; une articulation rotative d'axe X2 perpendiculaire au précédent relie le premier segment 3 et le deuxième segment 4 ; une autre articulation rotative 11 d'axe X3 parallèle au précédent relie le deuxième segment 4 au troisième segment 5 ; une articulation pivotante 12 d'axe X4 colinéaire au troisième segment 5 et au quatrième segment 6 unit ceux-ci, et l'axe X4 est perpendiculaire aux deux précédents ; enfin, une articulation pivotante 13 d'axe X5, perpendiculaire au précédent, unit le quatrième segment 6 au poignet 7. Le poignet 7 est lui-même composé de deux parties colinéaires 14 et 15, qui sont unies par une articulation pivotante 16 d'axe X6 qui leur est colinéaire et perpendiculaire à l'axe X5 précédent et qui peut tourner par rapport aux parties 14 et 15. Les deux branches 1 et 2 sont aussi symétriques que possible, c'est-à-dire qu'on préconise qu'elles aient le même nombre de segments disposés de la même façon et possédant des longueurs égales. Toutefois, les premiers segments 3 des branches 1 et 2 peuvent avoir sans grand inconvénient des longueurs différentes. L'embase commune est généralement de petites dimensions, ce qui signifie que les articulations 9 sont proches et que les branches divergent avant de converger vers l'articulation 16. La disposition des branches n'est pas symétrique à cause de leur nombre important de degrés de liberté et des irrégularités de mouvement qu'ils subissent.

Dans la partie de description qui précède, comme dans d'autres, des indications de position telles que « vertical », « supérieur », etc. ne sont pas limitatives puisque le bras pourrait être placé à une orientation quelconque. Les articulations « pivotantes » font tourner le segment qui les suit autour de son axe d'extension, alors que les articulations « rotatives » le font tourner autour d'un autre axe de manière à modifier l'angle entre les segments qu'elles relient.

Un mouvement infligé par l'opérateur tenant le poignet 7 déplace les deux branches 1 et 2 en faisant jouer essentiellement les articulations 9, 10 et 11 pour commander des mouvements de translation du poignet 7, et les autres articualtions 12, 13 et 16 pour commander ses mouvements de rotation. Le bon découplage qu'on constate entre ces deux groupes d'articulations permet de faciliter la commande et de réduire les singularités, qui proviennent souvent de couplages trop nombreux entre les articulations du bras. Un autre avantage spécifique à l'invention est la réduction des collisions, qui provient de la répartition des branches 1 et 2 dans des portions différentes de l'espace : les premiers segments 3 sont dressés l'un sur l'embase commune 8 et l'autre sous elle, c'est-à-dire qu'ils s'étendent dans des directions opposées, ce qui éloigne les deuxièmes segments 4, les troisièmes segments 5, etc. l'un de l'autre. Les branches 1 et 2 sont entièrement disposées dans des moitiés opposées de l'espace que sépare un plan médian P, tant du moins qu'il coupe le poignet 7. Quand ce dernier est élevé ou abaissé, les branches se rapprochent mais leur écartement reste suffisant pour exclure toute collision sauf en des positions ou pour des orientations extrêmes.

Les premiers segments 3 peuvent être décalés latéralement, ce qu'on a représenté ici ; mais il est plus avantageux qu'ils soient alignés, et que la distance entre les articulations 10 soit identique à la distance entre les articulations 13 ; enfin, il est avantageux que les segments 4 soient de longueurs égales, de même que les segments 5 et 6 combinés. D'une façon générale, les objectifs de l'invention sont mieux atteints avec des branches 1 et 2 symétriques et semblables.

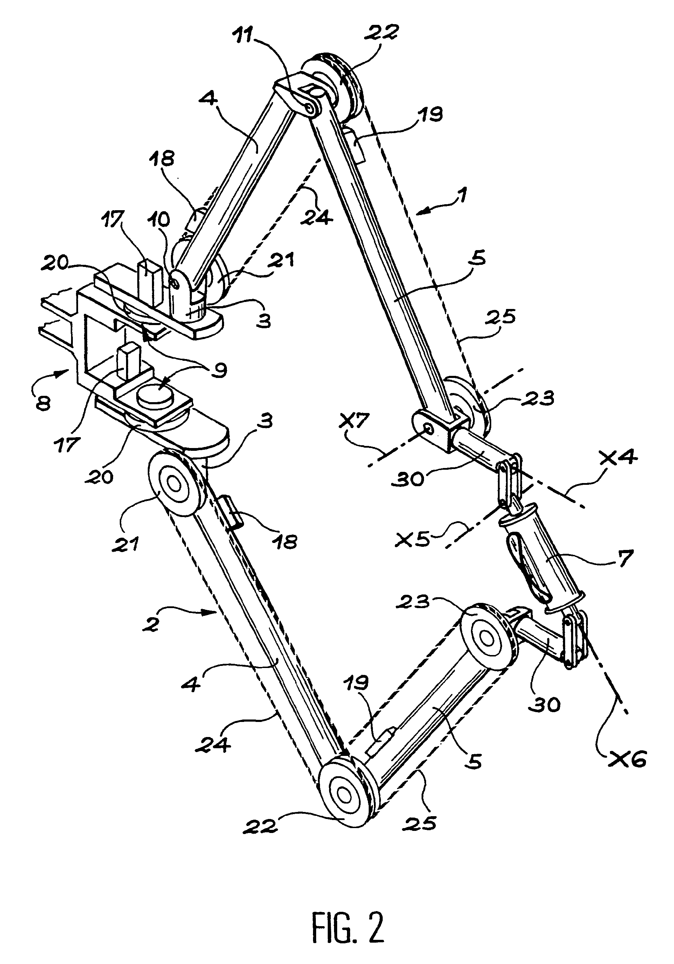

La figure 2 représente une réalisation perfectionnée. Les branches 1 et 2 comprennent, après un premier segment 3 court, un deuxième segment 4 assez long et un troisième segment 5 aussi long. Les articulations 9, 10 et 11 sont identiques à la réalisation qui précède.

Les longueurs égales des deuxièmes et troisièmes segments 4 et 5 jointes à la longueur beaucoup plus réduite des autres éléments du bras donnent à celui-ci une forme presque parfaite de losange, excellente pour procurer un grand champ de déplacements exempt de collisions.

Les bras de la figure 2 est original en ce qu'il comprend un porte-poignet 30 entre le troisième segment 5 et une extrémité respective du poignet 7. L'extrémité distale du troisième segment 5 est articulée au porte-poignet 30 par un axe d'articulation X7, qui sera réalisé de façon avantageuse parallèle aux axes X2 et X3. Les porte-poignet 30 comprennent des extrémités 31 tournant autour d'un axe X4, coïncidant avec une direction d'allongement général des porte-poignet 30 ; des embouts 32 sont accrochés aux extrémités 31 avec la faculté de tourner sur elles autour d'axes X5 perpendiculaires aux axes X4, et une poignée 33 unit les embouts 32 entre eux en les maintenant en prolongement, tout en pouvant tourner autour d'un axe X6 coaxial a eux. De façon avantageuse, cet axe est orthogonal aux paires d'axes X4 et X5 précédents dans une configuration de référence. La poignée 33 est pivotante autour de l'axe X6 sans changer la distance entre les axes X4 ou les porte-poignet 30, ce qui évite le risque de faire naître des collisions en rapprochant les branches l'une de l'autre.

Les axes X4, X5 et X6 sont des degrés de liberté identiques aux précédents en ce qu'ils sont formés par des articulations de pivotement pour X4 et X6 et de rotation pour X5. L'axe X7 est formé par une articulation de pivotement mais n'est pas un degré de liberté réel, comme on va l'expliquer.

Un élément essentiel à considérer est que les porte-poignet 30 et leurs axes X4 font un angle constant avec des plans fixes, ici des plans horizontaux, ce qui limite le risque de faire apparaître des singularités. Cela est créé au moyen d'une transmission comprenant, pour chacune des branches 1 et 2, une poulie de maintien 21 coaxiale à l'axe X2 et fixée au premier segment 3, une poulie de renvoi 22 coaxiale à l'axe X3 et pouvant tourner librement sur les segments 4 et 5, une poulie de maintien 23 coaxiale à l'axe X7 et fixée au porte-poignet 30, ainsi que deux courroies 24 et 25, tendues respectivement entre les poulies 21 et 22, et 22 et 23 en formant ainsi une chaîne. Quel que soit le mouvement infligé aux segments 4 et 5, l'action des courroies 24 et 25 maintient l'axe X7 dans une direction identique du plan vertical qu'ils forment, puisque la poulie 21 reste fixe.

Les porte-poignet 30 maintenus à orientation constante accroissent le découplage entre les mouvements de rotation et ceux de translation d'ensemble du poignet 7.

On va maintenant décrire le mode d'actionnement du bras. On se sert de moteurs pour renvoyer à l'opérateur des efforts ressentis au niveau du bras esclave ou générés par une simulation informatique. De tels moteurs 17 sont disposés sur l'embase fixe 8 et aident au basculement des premiers segments autour de l'axe X1 par un engrenage, une courroie ou une autre transmission, des moteurs 18 sont disposés aux axes X2 et aident au basculement des deuxièmes segments 4 par rapport aux premiers segments 3, d'autres moteurs 19 sont placés aux axes X3 et servent à régler les angles entre les deuxièmes et troisièmes segments 4 et 5. Les moteurs peuvent aussi être placés aux axes X2 ; leur mouvement est alors transmis aux axes X3 à l'aide d'une transmission à poulie ou autre, notamment une transmission à bielle, ce qui correspond à un montage de type parallélogramme bien connu de l'homme de l'art. Il n'est point besoin de placer de moteur aux axes X7, qui sont commandés autrement, pas plus qu'aux axes X4 et X5, puisque les rotations autour de ces axes découlent uniquement des mouvements aux extrémités des troisièmes segments 5 ; mais un moteur 26 de retour d'effort destiné à la poignée 33 peut être ajouté de manière à commander le degré de liberté de pivotement autour de l'axe X6. De manière avantageuse, le moteur 26 peut être solidaire d'une gaine formant la poignée 33, montée sur un des embouts 32 en liberté de rotation par un roulement 27, alors que l'arbre de sortie du moteur 26 est relié à l'embout 32 opposé. Il peut également être monté ailleurs, sur l'embase 8 ou sur l'une des branches 1 ou 2, ce qui nécessite toutefois un dispositif de transmission à la poignée 33.

Des capteurs tels que des codeurs de position angulaire sont associés aux différents moteurs pour mesurer leurs mouvements et indiquer l'état du bras et les commandes imposées, mais ici encore ces techniques sont connues et ne seront pas évoquées dans ce texte. Si un degré de liberté est superflu, on peut avantageusement renoncer à la commande du pivotement de la poignée 33 qui est la plus difficile à produire de façon précise et confortable.

L'organe terminal du bras n'est pas forcément une poignée, mais peut être un stylo, une boule, une pince, etc. selon les applications envisagées, dont on peut citer les jeux, les dispositifs de simulation, la télémanipulation, la téléopération ou déplacement à distance pour des industries diverses.

## Revendications

1. Bras de robot composé de segments articulés (3, 4, 5, 6) répartis en deux branches (1, 2) de structure parallèle réunies à leurs extrémités distales par un poignet (7) mobile en translations et en rotations, où les branches sont constituées de façon à s'étendre, à partir d'une embase commune (8), dans deux moitiés opposées de l'espace par rapport à un plan de séparation (P) quand le poignet (7) est coupé par ledit plan, et comprennent chacune un segment respectif (3) connecté à l'embase, **caractérisé en ce que** les segments connectés à l'embase le sont par des articulations pivotantes qui les font tourner autour de leur axe d'extension, et **en ce que** lesdits segments connectés à l'embase s'étendent dans des sens opposés à partir de l'embase.

2. Bras de robot selon la revendication 1, **caractérisé en ce que** les branches ont un même nombre de segments.

3. Bras de robot selon la revendication 2, **caractérisé en ce que** les branches sont symétriques et les segments (3) connectés à l'embase (8) sont en prolongement.

4. Bras de robot selon l'une quelconque des revendications 1 à 3, **caractérisé en ce que** les branches comprennent trois segments (3, 4, 5), reliés entre eux et à l'embase par des articulations à moteur de retour d'effort, et un segment de raccord (6, 30) au poignet (7).

5. Bras de robot selon l'une quelconque des revendications 1 à 4, **caractérisé en ce qu'**il comprend des porte-poignet (30) reliant les branches au poignet et maintenus à une orientation constante par des transmissions (21) à (25).

6. Bras de robot selon l'une quelconque des revendications 1 à 5, **caractérisé en ce que** le poignet (7) comprend une poignée (33) pivotante à moteur (26) de retour d'effort.

## Patentansprüche

1. Roboterarm, der Gelenksegmente (3, 4, 5, 6) aufweist, die in zwei Schenkel (1, 2) aus einer Parallelstruktur unterteilt sind, die an ihren distalen Enden durch ein Handgelenk (7), das verschiebbar und drehbeweglich ist, verbunden sind, wobei die Schenkel so ausgebildet sind, dass sie sich von einem gemeinsamen Ansatzstück (8) in zwei gegenüberliegende Hälften des Raums zu einer Trennebene (P) erstrecken, wenn das Handgelenk (7) durch die Ebene geteilt ist, und jeweils ein jeweiliges Segment (3), das mit dem Ansatzstück verbunden ist, aufweisen, **dadurch gekennzeichnet, dass** die Segmente, die mit dem Ansatzstück verbunden sind, durch Drehgelenke damit verbunden sind, die sie um ihre Verlängerungsachse drehen, und dass sich die Segmente, die mit dem Ansatzstück verbunden sind, in entgegengesetzte Richtungen von dem Ansatzstück erstrecken.

2. Roboterarm nach Anspruch 1, **dadurch gekennzeichnet, dass** die Schenkel eine gleiche Anzahl von Segmenten aufweisen.

3. Roboterarm nach Anspruch 2, **dadurch gekennzeichnet, dass** die Schenkel symmetrisch sind und die Segmente (3), die mit dem Ansatzstück (8) verbunden sind, in Verlängerung sind.

4. Roboterarm nach einem der Ansprüche 1 bis 3, **dadurch gekennzeichnet, dass** die Schenkel drei Segmente (3, 4, 5), die untereinander und an dem Ansatzstück durch Gelenke mit Kraftrückkopplungsmotor verbunden sind, und ein Verbindungssegment (6, 30) mit dem Handgelenk (7) aufweisen.

5. Roboterarm nach einem der Ansprüche 1 bis 4, **dadurch gekennzeichnet, dass** er Handgelenkhalter (30) aufweist, die die Schenkel mit dem Handgelenk verbinden und durch Getriebe (21) bis (25) in einer konstanten Ausrichtung gehalten werden.

6. Roboterarm nach einem der Ansprüche 1 bis 5, **dadurch gekennzeichnet, dass** das Handgelenk (7) einen Schwenkgriff (33) mit Kraftrückkopplungsmotor (26) aufweist.

## Claims

1. Robot arm composed of articulated segments (3, 4, 5, 6) distributed into two branches (1, 2) of parallel arrangement connected at their distal ends connected by a wrist (7) free to move in translations and in rotations, wherein the branches are made so as to extend, starting from a common base (8), in two halves of space on opposite sides of a separation plane (P) when the wrist (7) is intersected by the said plane, and comprise each a respective segment (3), connected to the base, **characterized in that** the segments that are connected to the base are connected thereto through pivoting articulations (9), that let them durn about their extension axis, and **in that** said segments connected to the base extend from the base in opposite directions moving away from each other.

2. Robot arm according to claim 1, **characterized in that** the branches have a same number of segments.

3. Robot arm according to claim 2, **characterized in that** the branches are symmetrical and the segments (7) connected to the base (8) are in extension to each other.

4. Robot arm according to any one of claims 1 to 3, **characterized in that** the branches comprise three segments (3, 4, 5) connected to each other and to the base by articulations with a force feedback motor, and a juncture segment (6, 30) connected to the wrist (7).

5. Robot arm according to any one of claims 1 to 4, **characterized in that** it comprises wrist holders (30) connecting the branches to the wrist and held at a constant orientation by transmissions (21 to 25).

6. Robot arm according to any one of claims 1 to 5, **characterized in that** the wrist (7) comprises a pivoting handle (33) with a force feedback motor (26).
